# EUROPEAN PATENT APPLICATION

(11) **EP 0 765 781 A1**
(43) Date of publication of application: **02.04.1997**
(21) Application number: 96306956.2
(22) Date of filing: 25.09.1996
(51) Int. Cl.: B60R 21/20

(54) **Crash protection device**

(30) Priority: 29.09.1995 GB 9519847
(71) Applicant: UNITED TECHNOLOGIES AUTOMOTIVE CLIFFORD LIMITED, Birmingham, B11 3DN (GB)
(72) Inventor: Edge, Stanley John, Birmingham B13 9QE (GB)
(74) Representative: Pearce, Anthony Richmond

(57) **Abstract**

An air bag crash protection device has a housing (12) including an opening closed by a cover (18). An inflatable bag (20) and a gas generator (22) are contained within the housing (12) . The cover (18) is formed of plastics material and includes integral hinges (26, 28) via which the cover (18) is connected with the remainder of the housing (12). Upon activation of the device, the cover (18) is pivoted about the hinges (26, 28) to permit protrusion of the bag through the opening. Electrical heater elements (34, 36) are provided adjacent the hinges (26, 28) to maintain the temperature of the plastics material in the region of the hinges within a predetermined temperature range.

## Description

This invention relates to crash protection devices for use in vehicles, and particularly to crash protection devices of the type in which a bag is inflated automatically under severe crash conditions to act as a cushion to restrict and cushion forward movement of an occupant of the vehicle.

It is known to incorporate inflatable bag crash protection devices into vehicle steering wheels, into the fascia panel of the vehicle in front of the front seat passenger, and also into the seat back of at least one of the front seats of the vehicle to protect persons occupying the rear seat of a vehicle. In known devices, the bag is contained within a housing having a front cover which hides the interior of the device. On impact, the bag is inflated and forces its way out of the housing by tearing the front cover along one or more predetermined tear lines so that the front cover hinges upon opening to make way for the inflating bag. In many known forms of such device, the front cover is formed in one or more pieces out of a synthetic plastics material which is arranged to fold about one or more integral hinge regions in the plastics material. Examples of such devices are disclosed, for example, in US Patent 3888508, US Patent 5002306, US Patent 4934735, GB-A-2236082, EP-A-0486708 and DE-A-4027068.

With such designs, the speed of opening of the device upon inflation of the bag needs to be very precisely controlled in order to ensure that inflation takes place at precisely the correct stage during a crash. Accordingly, much attention needs to be paid to the hinge design, the overall design, disposition and material of construction of the front cover, the mechanism used for inflating the bag with gas, and the construction and disposition of the sensors in the vehicle which are used to sense a condition in which inflation of the bag is required. One of the problems to be overcome is the problem of ensuring that the bag inflates correctly throughout the range of prevailing temperature conditions at the time of a crash (-40°C to +84°C), particularly the prevailing temperature conditions within the passenger area of the vehicle. The flexibility of plastics materials can vary quite dramatically over relatively narrow temperature ranges and so it is difficult to select a suitable plastics for the material of construction of the cover which is suitable for all of the temperature conditions which might prevail at the time of a crash.

It is an object of the present invention to obviate or mitigate this disadvantage.

According to the present invention, there is provided a crash protection device for use in a vehicle, said device comprising a housing including an opening, and an inflatable bag and inflator means contained within the housing and arranged such that, on activation of the device, said inflatable bag inflates and protrudes through the opening, said housing further including a cover formed of plastics material overlying said opening and including at least one integral hinge via which the cover is connected with the remainder of the housing, the cover overlying said opening and, upon activation of said device, being pivotable about said at least one integral hinge to permit protrusion of said bag through the opening, characterised in that electrical heating means is provided adjacent said at least one hinge to maintain the temperature of the plastics material in the region of said hinge within a predetermined temperature range.

With such an arrangement, it is possible to form the cover out of a plastics material without regard to its bending properties at relatively low temperatures below said predetermined temperature range. Thus, it is possible to use a relatively hard plastics material such as a thermoplastic elastomer having a Shore 'A' hardness of 65° - 75° as the material of construction of the front cover or as an inner layer of a cover having a softer, energy-absorbing outer layer. This gives particularly good opening properties when the inflator means comprises an explosive inflator of the azide or nitrocellulose type.

Typically, the heating means is arranged to maintain the hinge, whilst the vehicle is being driven, at a temperature in the range of 20 - 30 °C.

The heating means may comprise one or more flexible fabric (e.g. non-woven gauze) heating elements, for example one or more heating elements of the type which are conventionally used to heat the seats in some models of automobiles.

The heating means is preferably supplied with electrical energy under the control of a temperature sensor which is conveniently located as close as possible to the hinge. The provision of one or more electrical heating elements is not considered to add dramatically to the cost of a crash protection device because it is standard practice to provide an electrical supply other electrical items on or adjacent to the vehicle steering wheel and in other parts where a bag-type crash protection device would be provided, and because flexible fabric type heating elements are relatively low cost items and can be readily located in place during manufacture of the cover.

In the case where the cover is arranged to be opened by tearing along one or more tear lines provided in the cover, it is within the scope of the present invention to provide one or more additional heating elements adjacent said tear line or lines in order to ensure that tearing occurs in accordance with the design specification of the device.

Embodiments of the present invention will now be described, by way of example, with reference to the accompany drawing, in which
Fig 1 is a sectional view through part of a motor vehicle steering wheel including a boss incorporating a crash protection device according to the present invention, and
Fig 2 is a scrap section showing a modification.

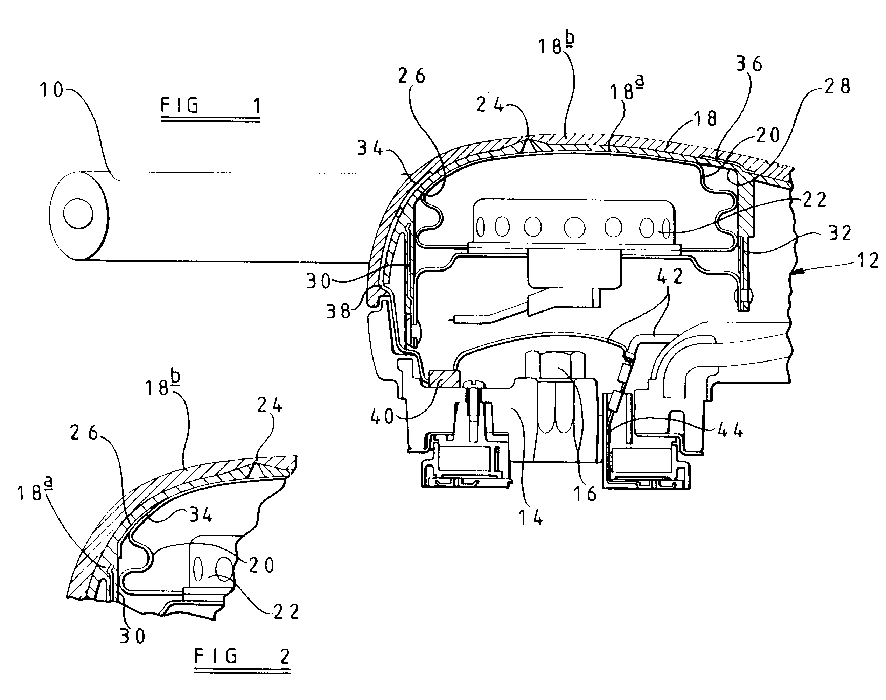

Referring now to Fig 1, there is illustrated a steering wheel having a rim 10 (only partly shown) surrounding a central hollow boss 12 defining a housing of a crash protection device of the inflatable bag type. The boss 12 includes a cup-shaped base 14 secured by means of a bolt 16 to the upper end of a steering column (not shown) in a manner known per se. The boss 12 further includes a front cover 18 which overlies the opening in the base 14.

Disposed within the boss 12 is a folded inflatable bag 20 and a pyrotechnic gas generator 22 of the azide or nitrocellulose type which is known per se. The gas generator 22 defines an inflator means which, when activated, produces enough gas to inflate the bag 20. If a crash occurs, the bag 20 needs to be inflated within a time of between 25 and 40 milliseconds from impact in order to provide a satisfactory cushion for the driver.

The bag 20 is hidden from view under the cover 18 which is formed of an inner moulding 18a of relatively hard synthetic plastics material (in this embodiment, a thermoplastic elastomer (TPE) or thermoplastic olefin (TPO) on which, in this embodiment, is in-situ moulded an outer moulding 18b of a relatively soft and energy-absorbing synthetic plastics material (eg a polyurethane reaction moulding material or soft TPE). Across a central region thereof, the cover 18 is formed with a tear line 24 defined by a grooved region of the inner moulding 18a and a much thinner overlying region of the moulding 18b. The cover 18 is designed to tear along the line 24 when the gas generator 22 is activated and to flex about integral hinges 26 and 28 disposed on opposite sides of the bag 20. These integral hinges 26 and 28 are provided just inwardly of respective mounting flanges 30 and 32 upon which the bag 20 and gas generator 22 are mounted. The flange 30 is also used to secure the adjacent side of the cover 18 to the base 14. The other side of the cover 18 is not shown in the drawing but extends to the rim 10 of the steering wheel.

In accordance with the present invention, respective electrical heating elements 34 and 36 are disposed adjacent to the integral hinges 26 and 28. Each heating element 34, 36 is defined by a non-woven gauze element of the type known per se and commonly used in the electrical heating of vehicle seats. Each heating element 34, 36 is provided with supply leads 38 (only shown for element 34). In the embodiment of Fig 1, the heating elements 34 and 36 and supply leads 38 are disposed between the inner moulding 18a and the outer moulding 18b of the cover 18. Thus, the heating elements 34 and 36 and supply leads 38 can be incorporated after formation of the inner moulding 18a by including them in the mould used to mould the outer moulding 18b in situ against the inner moulding 18a. The supply leads 38 to each of the heating elements 34 and 36 are connected to a respective temperature sensor 40 (only the sensor 40 associated with the heating element 34 is illustrated in Fig 1). Each temperature sensor 40 is connected via a lead 42 to an electrical supply terminal 44.

When the vehicle is in use with the ignition switched on, the electrical supply to the terminal 44 is energised to energise the temperature sensors 40. In this particular embodiment, the temperature sensors 40 are arranged to cause electrical heating energy to be supplied to the heating elements 34 and 36 in the event that they sense a temperature which is less than +20°C and cause the supply to be discontinued when the sense a temperature which is above +30°C. Thus, the temperature of each hinge region 26, 28 is maintained within the desired temperature range so that the hinge possesses accurately predetermined bending characteristics whereby the opening characteristics of the cover 18 upon tearing along line 24 can be consistently maintained.

In the modification illustrated in Fig 2, the heating element 34 (and the heating element 36 - not shown) is disposed against the inner surface of the inner moulding 18a rather than between the mouldings 18a and 18b. In Fig 2, the leads 38 are not illustrated.

In an alternative embodiment (not shown), the cover 18 is a one-piece moulding and the heating elements 34 and 36 are bonded to the inside surface of such moulding.

In a further embodiment (also not shown), the cover is formed as a one-piece, two-piece or multi-piece moulding as part of a steering wheel wherein at least part of the cover is formed at the same time, and of the same material, as at least part of the steering wheel rim and/or at least one steering wheel spoke. Such a construction can be employed in a situation where the steering wheel including (a) a central boss incorporating the cover, (b) the steering wheel rim and (c) at least one spoke interconnecting the rim and the boss, is formed as a unit or module having a rear recess which receives a unit or module comprising (a) the inflatable bag, (b) the inflator or gas generator and (c) a fitment which enables the wheel to be secured to the steering column.

## Claims

1. A crash protection device for use in a vehicle, said device comprising a housing (12) including an opening, and an inflatable bag (20) and inflator means (22) contained within the housing (12) and arranged such that, on activation of the device, said inflatable bag (20) inflates and protrudes through the opening, said housing (12) further including a cover (18) formed of plastics material overlying said opening and including at least one integral hinge (26, 28) via which the cover (18) is connected with the remainder of the housing (12), the cover (18) overlying said opening and, upon activation of said device, being pivotable about said at least one integral hinge (26, 28) to permit protrusion of said bag (20) through the opening, characterised in that electrical heating means (34, 36) is provided adjacent said at least one hinge (26, 28) to maintain the temperature of the plastics material in the region of said hinge (26, 28) within a predetermined temperature range.

2. A device as claimed in claim 1, wherein the heating means (34, 36) is arranged to maintain the hinge (26, 28), whilst the vehicle is being driven, at a temperature in the range of 20 - 30 °C.

3. A device as claimed in claim 1 or 2, wherein the heating means (34, 36) comprises one or more flexible fabric heating elements.

4. A device as claimed in claim 1, 2 or 3, wherein the heating element (34, 36) is supplied with electrical energy under the control of a temperature sensor which is located adjacent to the hinge (26, 28).

5. A device as claimed in any preceding claim, wherein the cover (18) is arranged to be opened by tearing along one or more tear lines (24) provided in the cover (18), and one or more additional heating elements are provided adjacent said tear line or lines (24).
